# EUROPÄISCHE PATENTANMELDUNG

(11) **EP 0 671 857 A2**
(43) Veröffentlichungstag der Anmeldung: **13.09.1995**
(21) Anmeldenummer: 95103232.5
(22) Anmeldetag: 07.03.1995
(51) Int. Cl.: H04Q 7/30

(54) **Verfahren und Schaltungsanordnung zur Koordination des Zugriffs mehrerer Nachrichtenquellen auf einen Bus**

(30) Priorität: 09.03.1994 DE 4407795
(71) Anmelder: Alcatel SEL Aktiengesellschaft, D-70435 Stuttgart (DE)
(72) Erfinder: Geywitz, Klaus, D-70839 Gerlingen (DE); Endler, Joachim, D-70435 Stuttgart (DE)
(74) Vertreter: Müller, Joachim

(57) **Zusammenfassung**

Um Konkurrenzsituationen beim Zugriff auf einen Bus zu vermeiden, ist es bekannt, Steuerschaltungen einzusetzen und über Organisationsleitungen zwischen Nachrichtenquellen und Nachrichtensenke den Zugriff der Nachrichtenquellen auf den Bus zu koordinieren. Erfindungsgemäß wird die Umschaltung der Zugriffsberechtigung von einer Nachrichtenquelle auf eine andere durch einen vom Nachrichtenangebot ausgelösten Zugriffswunsch über eine die Nachrichtenquelle (MAC-ASIC 1, MAC-ASIC 2, MAC-ASIC 3, MAC-ASIC n) verbindende Steuerleitung (TSDIS) vorgenommen. Das Verfahren kann bei einer nach dem DECT-Standard oder bei einer nach dem CT 2- oder CT 3-Standard arbeitenden Telekommunikationsanlage angewendet werden, wenn bei Standortänderung des Teilnehmers die ursprüngliche Funkverbindung über eine erste Basisstation (BS 1) von einer zweiten Basisstation (BS 2) übernommen wird, die einen besseren Übertragungsweg zur Verfügung stellt.

## Beschreibung

Die Erfindung betrifft ein Verfahren und eine Schaltungsanordnung zur Koordination des Zugriffs mehrerer Nachrichtenquellen auf einen Bus. Wenn mehrere Baugruppen oder mehrere Geräte an einen Bus angeschlossen sind, kann die Situation auftreten, daß gleichzeitig mindestens zwei Baugruppen oder Geräte einen Sendewunsch haben und auf den Bus zugreifen wollen. Um solche Konkurrenzsituationen zu umgehen, ist es allgemein bekannt, für die Steuerung und Sicherung der Nachrichtenübertragung auf einem Bus eine Steuerschaltung einzusetzen. Das Problem wird an der Fernwirktechnik so gelöst, daß zur Steuerung zwei Organisationsleitungen vorgesehen sind, von denen eine als Anforderungsleitung an die Baugruppen oder Geräte geschaltet ist und die zweite als Stoppleitung dazu dient, während der Datenausgabezeit einer Baugruppe oder eines Gerätes einen Adreßzähler zu stoppen, vgl. DE 33 43 456 C2. Den bekannten Lösungen ist gemeinsam, daß von der an dem Bus oder an der Leitung angeschlossenen Nachrichtensenke durch mindestens eine zusätzliche Steuerleitung die Arbeitsweise der Nachrichtenquelle so gesteuert wird, daß während einer bestimmten Zeitdauer jeweils nur eine Nachrichtenquelle in den Sendezustand versetzt wird.

Mit der Erfindung wird die Aufgabe gelöst, den Zugriff zu einem Bus von mehreren Nachrichtenquellen zu koordinieren und zu synchronisieren, ohne eine Zusatzleitung zwischen Nachrichtenquelle und Nachrichtensenke zu verwenden und ohne einen direkten Zugriff zu einem Schaltregister oder zu einem Rechner herstellen zu müssen.

Die Erfindung wird durch das im ersten Anspruch angegebene Verfahren und durch die im fünften Anspruch angegebene Schaltungsanordnung beschrieben.

Praktische Bedeutung hat die Lösung der oben genannten Aufgabe in Telekommunikationsanlagen mit schnurlosen Endgeräten. In diesen Anlagen tritt eine Konkurrenzsituation immer dann auf, wenn durch Ortsveränderung des schnurlosen Endgerätes innerhalb eines beispielsweise von zwei Basisstationen erzeugten Zellenbündels der Zugriff auf die Anlage über zwei Basisstationen gleichzeitig erfolgen kann. Mit der erfindungsgemäßen Lösung wird gewährleistet, daß ein Wechsel innerhalb eines Zellenbündels von einer ersten Zelle zu einer zweiten Zelle unterbrechungsfrei und für den Teilnehmer unbemerkt erfolgt. Dieser Vorgang wird im später erwähnten DECT-Standard als Seamless Inter Cell Bearer Handover bezeichnet.

Das Wesen der Erfindung besteht darin, daß eine Echtzeitumschaltung von einer ersten Basisstation auf eine zweite Basisstation von der angebotenen Nachricht vorbereitet wird, die Ausführung selbst und die Synchronisierung wird erfindungsgemäß über eine spezielle Signalisierung vorgenommen.

Die Erfindung wird nachstehend an einem Ausführungsbeispiel erläutert. In der dazugehörigen Zeichnung zeigen:
- Fig. 1: ein Schaltbild der erfindungsgemäßen Schaltungsanordnung und
- Fig. 2: eine schematische Darstellung der Vorgänge beim Inter Cell Bearer Handover.

Die Wirkungsweise der Erfindung wird in einem Telekommunikationssystem mit schnurlosen Endgeräten, hier beispielsweise mit schnurlosen Telefonen, dargestellt. Die wesentlichen Funktionen und Leistungsmerkmale eines solchen Telekommunikationssystems sind von einem europäischen Standardisierungsgremium, dem European Telecommunications Standards Institute, kurz ETSI, als europäischer Standard für schnurlose Telekommunikation, kurz DECT-Standard, englisch Digital European Cordless Telecommunications - Standard, beschrieben worden.

Die Erfindung kann aber auch problemlos in einem nach dem CT-Standard, insbesondere nach dem CT 2- und CT 3-Standard arbeitenden Telekommunikationssystem eingesetzt werden. Der CT-Standard, Cordless Telecommunications-Standard, wurde von der CEPT, Conference Européenne des administrations des Postes et des Télécommunications, erarbeitet und ist im Laufe der Jahre modifiziert und dann beispielsweise mit CT 2 und CT 3 bezeichnet worden.

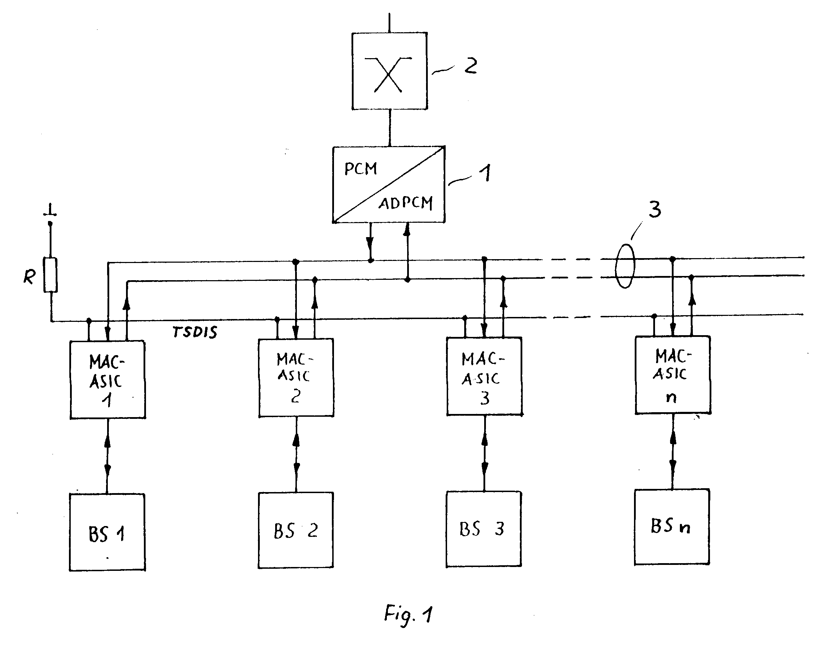

Gemäß Fig. 1 besteht die erfindungsgemäße Schaltungsanordnung im wesentlichen aus einer beliebigen Anzahl von Basisstationen BS 1, BS 2, BS 3, BS n mit diesen jeweils zugeordneten anwenderspezifischen Schaltkreisen MAC-ASIC 1, MAC-ASIC 2, MAC-ASIC 3, MAC-ASIC n und aus einem ADPCM/PCM-Umsetzer 1 sowie einem die weitere Vermittlungsanlage andeutenden Block 2. Der ADPCM/PCM-Umsetzer 1 ist über einen Datenbus 3, hier einem ADPCM-Highway, mit den anwenderspezifischen Schaltkreisen MAC-ASIC 1 ... MAC-ASIC n verbunden. Die anwenderspezifischen Schaltkreise MAC-ASIC 1 ... MAC-ASIC n enthalten jeweils eine open-Kollektor-Stufe, die mit einem gemeinsamen Widerstand R abgeschlossen ist. Die so entstehende Verbindung ist mit TSDIS, abgeleitet von Timeslot disable, bezeichnet. Entsprechend der im DECT-Standard beschriebenen Medium Access Control Schicht, kurz MAC-Layer, werden von den anwenderspezifischen Schaltkreisen MAC-ASIC 1 ... MAC-ASIC n mit Hilfe einer hier nicht dargestellten zentralen Steuereinrichtung die für das vorliegende Ausführungsbeispiel wesentlichen Funktionen Auswahl, Einstellung und Freigabe der Kanäle und Herstellung der Ende-zu-Ende-Verbindung ausgeführt.

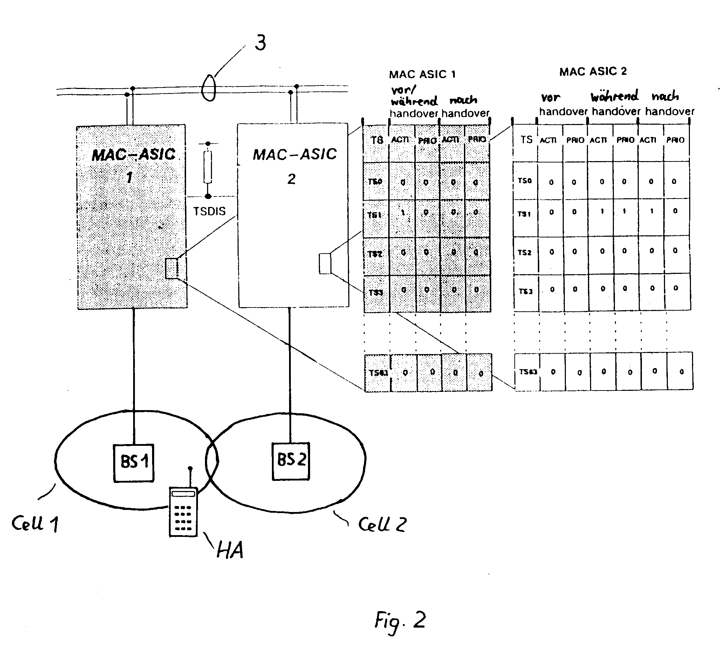

Befindet sich ein in der Fig. 2 dargestellter Handapparat HA in der von der ersten Basisstation BS 1 gebildeten ersten Funkzelle Cell 1, so wird bei einem Verbindungswunsch eine Funkverbindung zwischen Handapparat HA und erster Basisstation BS 1 hergestellt. Beim Aufbau einer Gesprächsverbindung werden innerhalb eines Rahmens von 10ms Dauer nur zwei von 24 Zeitschlitzen, alternierend zwischen Sende- und Empfangssignal, genutzt. Die verbleibende Zeit wird von dem Handapparat HA genutzt, um weitere Frequenzen und Zeitschlitze zu überwachen, um gegebenenfalls das Gespräch auf einen zur Verfügung stehenden günstigeren Kanal umzulegen. Dieser Vorgang tritt innerhalb einer Funkzelle auf oder wenn der Teilnehmer mit dem Handapparat HA die erste Funkzelle Cell 1 verläßt und in den Funkbereich einer zweiten Funkzelle Cell 2 kommt, wobei sich die Funkbereiche der ersten und zweiten Funkzelle Cell 1, Cell 2 überlappen. In diesem Fall wird parallel zu der bereits bestehenden Funkverbindung zwischen Handapparat HA und erster Basisstation BS 1 eine zweite Funkverbindung zwischen Handapparat HA und zweiter Basisstation BS 2 hergestellt. Während das Lesen der Daten vom ADPCM-Highway 3 von dem ersten anwenderspezifischen Schaltkreis MAC-ASIC 1 und dem zweiten anwenderspezifischen Schaltkreis MAC-ASIC 2 parallel problemlos möglich ist, muß der Schreibvorgang koordiniert werden, um Kollisionen auf dem ADPCM-Highway 3 zu vermeiden. Deshalb hat immer nur ein anwenderspezifischer Schaltkreis die Priorität, Daten auf den ADPCM-Highway 3 zu senden. Im vorliegenden Beispiel hat zunächst der erste anwenderspezifische Schaltkreis MAC-ASIC 1 die Master-Funktion. Vor dem Sendevorgang wird jeweils der Zustand der TSDIS-Leitung abgetastet, der angibt, ob die Master-Funktion weiter beibehalten wird. Falls das von der zweiten Basisstation BS 2 vom Handapparat HA empfangene Funksignal stärker ist als das von der ersten Basisstation BS 1 empfangene, so bewirkt diese Situation, daß von der zentralen Rechnersteuerung die Information gegeben wird, einen Basisstationswechsel durchzuführen. Die Ausführung dieses sogenannten handover-Vorganges selbst geschieht über die TSDIS-Leitung, indem durch Potentialwechsel auf der TSDIS-Leitung dem ersten anwenderspezifischen Schaltkreis MAC-ASIC 1 mitgeteilt wird, daß seine Master-Funktion beendet ist und auf den zweiten anwenderspezifischen Schaltkreis MAC-ASIC 2 übergegangen ist.

In Fig. 2 sind Einzelheiten der Verfahrenschritte beim Basisstationswechsel dargestellt. Während der normalen Arbeitsweise ist jedem anwenderspezifischen Schaltkreis MAC-ASIC 1, MAC-ASIC 2 ein bestimmter Zeitschlitz auf dem ADPCM-Highway 3 zugewiesen und die TSDIS-Leitung wird in ihrem passiven Zustand gehalten. Jeder anwenderspezifische Schaltkreis MAC-ASIC muß vor dem Sendevorgang die TSDIS-Leitung abtasten und darf nur auf den ADPCM-Highway 3 zugreifen, wenn die TSDIS-Leitung in ihrem passiven Zustand ist. Falls der aktive Zustand signalisiert wurde, dann hat ein anderer anwenderspezifische Schaltkreis MAC-ASIC die Priorität erhalten, um auf den zugeordneten Zeitschlitz zuzugreifen.

In dem in Fig. 2 dargestellten Beispiel ist dem Handapparat HA der erste anwenderspezifische Schaltkreis MAC-ASIC1 und der Zeitschlitz TS1 zugeordnet. In diesem Zeitschlitz ist während des Normalbetriebs ein Active-bit ACTI "1" und ein Priority-bit PRIO "0". Im Fall der handover-Situation ist es notwendig, die Funktionen in den anwenderspezifischen Schaltkreisen MAC-ASIC 1, MAC-ASIC 2 so zu synchronisieren, daß im Moment des Umschaltens von dem ersten anwenderspezifischen Schaltkreis MAC-ASIC 1 auf den zweiten anwenderspezifischen Schaltkreis MAC-ASIC 2, dem handover, keine Sprachanteile verloren gehen und der Basisstationswechsel unterbrechungsfrei erfolgt. Dazu werden im zweiten anwenderspezifischen Schaltkreis MAC-ASIC 2 im Zeitschlitz TS1 das Active-bit ACTI und das Priority-bit PRIO auf "1" gesetzt. Mit dem Setzen des Priority-bit PRIO auf "1" im zweiten anwenderspezifischen Schaltkreis MAC-ASIC 2 wird von diesem dem ersten anwenderspezifischen Schaltkreis MAC-ASIC 1 über das Schalten der TSDIS-Leitung in den aktiven Zustand während des ersten Zeitschlitzes TS1 signalisiert, den ersten Zeitschlitz TS1 nicht weiter zu belegen. In diesem Moment ist der Basisstationswechsel unterbrechungsfrei durchgeführt worden und das Active-bit ACTI vom ersten anwenderspezifischen Schaltkreis MAC-ASIC 1 und das Priority-bit PRIO vom zweiten anwenderspezifischen Schaltkreis MAC-ASIC 2 werden von "1" auf "0" rückgesetzt. Die Master-Funktion für das Senden ist damit auf den zweiten anwenderspezifischen Schaltkreis MAC-ASIC 2 übergegangen.

## Patentansprüche

1. Verfahren zur Koordination des Zugriffs mehrerer Nachrichtenquellen (MAC-ASIC 1, MAC-ASIC 2, MAC-ASIC 3, MAC-ASIC n), denen eine zentrale Steuereinrichtung zugeordnet ist, auf einen Bus (3), **dadurch gekennzeichnet,** daß von einer Nachrichtenquelle durch ein Nachrichtenangebot der zentralen Steuereinrichtung ein Zugriffswunsch zu dem Bus (3) signalisiert wird, daß der Zugriff über eine Steuerleitung (TSDIS) vorbereitet wird, deren Zustand von den Nachrichtenquellen (MAC-ASIC 1, MAC-ASIC 2, MAC-ASIC 3, MAC-ASIC n) abgetastet wird und daß bei Potentialänderung auf der Steuerleitung (TSDIS) entsprechend einem Master-Slave-Mechanismus die Zugriffsberechtigung auf den Bus (3) von einer bisher priorisierten Nachrichtenquelle auf eine andere nunmehr priorisierte Nachrichtenquelle übergeht.

2. Verfahren nach Anspruch 1, dadurch gekennzeichnet, daß die Potentialänderung auf der Steuerleitung (TSDIS) im Zeitschlitzraster der zum Bus übertragenen Nachrichten erfolgt und somit Synchronismus der Nachrichtenquellen beim Übergang der Priorität von einer Nachrichtenquelle auf eine andere erhalten bleibt.

3. Verfahren nach den Ansprüchen 1 und 2, dadurch gekennzeichnet, daß die Verfahrensschritte in einem nach dem DECT-Standard arbeitenden Telekommunikationssystem bei dem unterbrechungsfreien Basisstationswechsel durchgeführt werden.

4. Verfahren nach den Ansprüchen 1 und 2, dadurch gekennzeichnet, daß die Verfahrensschritte in einem nach der CT 2- oder CT 3-Spezifikation arbeitenden Telekommunikationssystem bei dem unterbrechungsfreien Basisstationswechsel durchgeführt werden.

5. Schaltungsanordnung zur Durchführung des Verfahrens nach Anspruch 1, dadurch gekennzeichnet, daß die Nachrichtenquellen (MAC-ASIC 1, MAC-ASIC 2, MAC-ASIC 3, MAC-ASIC n) jeweils eine open-Kollektor-Stufe enthalten, die gemeinsam über einen Widerstand (R) an den Anschluß einer Spannungsquelle geschaltet sind.
